(19) Europäisches Patentamt
European Patent Office
Office européen des brevets

(11) **EP 0 900 525 A1**

(12) **EUROPÄISCHE PATENTANMELDUNG**

(43) Veröffentlichungstag:
**10.03.1999 Patentblatt 1999/10**

(51) Int. Cl.⁶: **A01N 43/80**

(21) Anmeldenummer: **97114397.9**

(22) Anmeldetag: **20.08.1997**

(84) Benannte Vertragsstaaten:
**AT BE CH DE DK ES FI FR GB GR IE IT LI LU MC NL PT SE**

(71) Anmelder: **THOR CHEMIE GMBH**
**D-67346 Speyer (DE)**

(72) Erfinder:
• **Antoni-Zimmermann, Dagmar**
**67346 Speyer (DE)**

• **Baum, Rüdiger**
**68753 Waghäusel (DE)**
• **Schmidt, Hans-Jürgen**
**67346 Speyer (DE)**
• **Wunder, Thomas Dr.**
**67433 Neustadt/Wstr. (DE)**

(74) Vertreter:
**DIEHL GLAESER HILTL & PARTNER**
**Flüggenstrasse 13**
**80639 München (DE)**

(54) **Synergistische Biozidzusammensetzung**

(57) Angegeben wird eine synergistische Biozidzusammensetzung, die mindestens zwei biozide Wirkstoffe aufweist, von denen einer 2-Methylisothiazolin-3-on ist. Die Zusammensetzung ist dadurch gekennzeichnet, daß sie als einen weiteren bioziden Wirkstoff 1,2-Benzisothiazolin-3-on enthält. Die Zusammensetzung hat eine relativ günstige Toxizität sowie eine relativ lange Wirksamkeit bei pH-Werten von über 9 und kann bei Bedarf als flüssiges Medium nur Wasser enthalten.

**Beschreibung**

Die Erfindung betrifft eine Biozidzusammensetzung als Zusatz zu Stoffen, die von schädlichen Mikroorganismen befallen werden können. Insbesondere ist die Erfindung auf eine Biozidzusammensetzung mit synergistisch wirkenden Komponenten gerichtet.

Biozide Mittel werden in vielen Bereichen eingesetzt, beispielsweise zur Bekämpfung von schädlichen Bakterien, Pilzen oder Algen. Es ist seit langem bekannt, in solchen Zusammensetzungen 3-Isothiazolin-3-one (die auch als 3-Isothiazolone bezeichnet werden) einzusetzen, da sich unter diesen sehr wirksame biozide Verbindungen befinden.

Es ist auch bekannt, eine Kombination aus verschiedenen Isothiazolin-3-onen zu benutzen. Beispielsweise ist in der EP 0676140 A1 eine synergistische biozide Zusammensetzung beschrieben, die 2-Methylisothiazolin-3-on (2-Methyl-3-isothiazolon) und 2-n-Octylisothiazolin-3-on (2-n-Octyl-3-isothiazolon) enthält. Der $LD_{50}$-Wert von 2-n-Octylisothiazolin-3-on beträgt im Falle von Ratten bei oraler Verabreichung etwa 126 mg/kg. Es ist aber wünschenswert, Biozidzusammensetzungen zu verwenden, die günstigere Toxizitätswerte aufweisen. Außerdem nimmt bei pH-Werten von über 9 die Wirksamkeit der bekannten Biozidzusammensetzung relativ rasch ab.

Hinzu kommt, daß das 2-n-Octylisothiazolin-3-on in Wasser nur wenig löslich ist. Deshalb müssen Zusammensetzungen auf der Basis dieses Biozids entweder große Emulgatormengen enthalten, wenn eine wäßrige Phase vorliegt, oder es müssen organische Lösungsmittel zugesetzt werden. Letztere sind aber bei verschiedenen Verwendungen biozider Zusammensetzungen unerwünscht. Auch nimmt aufgrund des ständig steigenden Umweltbewußtseins der gewerblichen und privaten Verbraucher das Bedürfnis nach Anstrichstoffen ohne Lösungsmittelemission immer mehr zu. Die Konservierungsmittel solcher Anstrichstoffe dürfen somit keine organischen Lösungsmittel enthalten.

Auch soll ein großer Anteil an Emulgatoren in einer Biozidzusammensetzung vermieden werden, da er außer den entsprechend höheren Herstellungskosten beispielsweise auch zu unerwünschter Schaumbildung bei dem damit versehenen Produkt führen kann. Ferner beeinträchtigen große Emulgatormengen die rheologischen Eigenschaften von Pigmentdispersionen.

Der Erfindung liegt daher die Aufgabe zugrunde, eine Biozidzusammensetzung anzugeben, die frei von AOX, das heißt frei von an Aktivkohle adsorbierbaren organischen Chlor-, Brom- und Iodverbindungen, ist, sowie im Vergleich zu Zusammensetzungen auf der Basis von 2-n-Octylisothiazolin-3-on eine günstigere Toxizität und bei pH-Werten von über 9 eine länger anhaltende Wirksamkeit, das heißt eine größere Sicherheit bezüglich des bi<br>ziden Effekts, aufweist. Ferner soll die Biozidzusammensetzung so formulierbar sein, daß sie bei Bedarf als flüssiges Medium nur Wasser enthält und vorzugsweise einen neutralen pH-Wert aufweist.

Diese Aufgabe löst die Erfindung durch eine Biozidzusammensetzung mit mindestens zwei bioziden Wirkstoffen, von denen einer 2-Methylisothiazolin-3-on ist. Die Zusammensetzung ist dadurch gekennzeichnet, daß sie als einen weiteren bioziden Wirkstoff 1,2-Benzisothiazolin-3-on enthält.

Die erfindungsgemäße Biozidzusammensetzung ist nicht nur frei von AOX, sondern hat auch den wesentlichen Vorteil einer verringerten Toxizität. Dieser ergibt sich beispielsweise dadurch, daß der $LD_{50}$-Wert von 1,2-Benzisothiazolin-3-on im Falle von Ratten bei oraler Verabreichung mit 1020 mg/kg vergleichsweise hoch liegt.

Ferner können die erfindungsgemäßen Biozidzusammensetzungen bei Bedarf nur mit Wasser als flüssigem Medium hergestellt werden. Dabei ist der Zusatz von Emulgatoren und/oder organischen Lösungsmitteln nicht nötig.

Eine weitere Verbesserung bringen die erfindungsgemäßen Biozidzusammensetzungen in der Praxis dadurch, daß sie in einer Umgebung mit pH-Werten von über 9 ihre Wirksamkeit länger beibehalten als die bekannten Biozidzusammensetzungen.

Die erfindungsgemäße Biozidzusammensetzung enthält das 2-Methylisothiazolin-3-on und das 1,2-Benzisothiazolin-3-on normalerweise im Gewichtsverhältnis von (50-1):(1-50), vorzugsweise im Gewichtsverhältnis von (15-1):(1-8), insbesondere im Gewichtsverhältnis von (4-1):(1-4).

In der Biodzidzusammensetzung liegen das 2-Methylisothiazolin-3-on und das 1,2-Benzisothiazolin-3-on in einer Gesamtkonzentration von vorzugsweise 0,5 bis 50 Gew%, insbesondere von 2,5 bis 10 Gew%, jeweils bezogen auf die gesamte Biozidzusammensetzung, vor.

Es ist zweckmäßig, wenn die Biozide der erfindungsgemäßen Zusammensetzung in Kombination mit einem polaren oder unpolaren flüssigen Medium eingesetzt werden. Dabei kann dieses Medium beispielsweise in der Biozidzusammensetzung und/oder in dem zu konservierenden Stoff vorgegeben sein. Auch ist es möglich, das polare oder unpolare Medium erst zuzusetzen, nachdem die erfindungsgemäß benutzten Biozide bereits mit dem zu konservierenden Stoff in Kontakt gebracht worden sind.

Bevorzugte polare flüssige Medien sind Wasser, ein aliphatischer Alkohol mit 1 bis 4 Kohlenstoffatomen, z.B. Ethanol und Isopropanol, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z.B. Butyldiglykolacetat oder 2,2,4-Trimethylpentandiolmonoisobutyrat, ein Polyethylenglykol, ein Polypropylenglykol, N,N-Dimethylformamid oder ein Gemisch aus solchen Stoffen. Das polare flüssige Medium ist insbesondere Wasser, wobei die entsprechende Biozidzusammensetzung in ihrem pH-Wert vorzugsweise neutral eingestellt ist. Dabei liegt dann das 2-Methylisothiazolin-3-on in gelöster Form und das 1,2-Benzisothiazolin-3-on in feindisperser Form vor.

Als unpolare flüssige Medien dienen z. B. Aromaten, vorzugsweise Xylol und Toluol.

Die Biozide der erfindungsgemäßen Zusammensetzung können auch gleichzeitig mit einem polaren und einem unpolaren flüssigen Medium kombiniert werden.

Die erfindungsgemäße Biozidzusammensetzung kann zusätzlich einen oder mehrere weitere Wirkstoffe enthalten, die in Abhängigkeit vom Anmeldungsgebiet ausgewählt werden. Spezielle Beispiele für solche zusätzlichen Wirkstoffe sind nachfolgend angegeben.

Benzylalkohol
2,4-Dichlorbenzylalkohol
2-Phenoxyethanol
2-Phenoxyethanolhemiformal
Phenylethylalkohol
2-Brom-2-nitropropan-1,3-diol
5-Brom-5-nitro-1,3-dioxan
Formaldehyd und Formaldehyd-Depotstoffe
Dimethyloldimethylhydantoin
Glyoxal
Glutardialdehyd
Sorbinsäure
Benzoesäure
Salicylsäure
p-Hydroxybenzoesäureester
Chloracetamid
N-Methylolchloracetamid
Phenole, wie p-Chlor-m-kresol und o-Phenylphenol
N-Methylolharnstoff
Benzylformal
4,4-Dimethyl-1,3-oxazolidin
1,3,5-Hexahydrotriazin
Quartäre Ammoniumverbindungen, wie

N-Alkyl-N,N-dimethylbenzylammoniumchlorid
Di-n-decyldimethylammoniumchlord

Cetylpyridiniumchlorid
Diguanidin
Polybiguanid
Chlorhexidin
1,2-Dibrom-2,4-dicyanobutan
3,5-Dichlor-4-hydroxybenzaldehyd
Ethylenglykolhemiformal
Tetra-(hydroxymethyl)-phosphoniumsalze
Dichlorophen
2,2-Dibrom-3-nitrilopropionsäureamid
3-Iodpropargyl-N-butylcarbamat
Methyl-N-benzimidazol-2-ylcarbamat
2-n-Octylisothiazolin-3-on
4,5-Dichlor-2-n-octylisothiazolin-3-on
5-Chlor-2-methylisothiazolin-3-on
4,5-Trimethylen-2-methylisothiazolin-3-on

Die erfindungsgemäßen Biozidzusammensetzungen können weitere übliche Bestandteile enthalten, die dem Fachmann auf dem Gebiet der Biozide als Zusatzstoffe bekannt sind. Es sind dies z.B. Verdickungsmittel, Entschäumer, Stoffe zur Einstellung des pH-Werts, Duftstoffe, Dispergierhilfsmittel und färbende Stoffe.

Das 2-Methylisothiazolin-3-on und das 1,2-Benzisothiazolin-3-on sind bekannte Stoffe. Das 2-Methylisothiazolin-3-on kann beispielsweise gemäß der US 5466818 hergestellt werden. Das dabei erhaltene Reaktionsprodukt läßt sich z.B. durch Säulenchromatographie reinigen. Das 1,2-Benzisothiazolin-3-on ist im Handel erhältlich (z.B. unter der Bezeichnung "Acticide BW 20" und "Acticide BIT" von der Fa. Thor Chemie GmbH).

Bei der erfindungsgemäßen Biozidzusammensetzung handelt es sich um ein System, bei dem die Kombination aus 2-Methylisothiazolin-3-on und 1,2-Benzisothiazolin-3-on synergistisch eine biozide Wirkung entfaltet, die größer ist als jene, die jede dieser Verbindungen allein aufweist.

Die erfindungsgemäße Biozidzusammensetzung kann auf sehr unterschiedlichen Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, Wasserkreisläufen, Polymerdispersionen und Kühlschmierstoffen gegen den Befall durch beispielsweise Bakterien, filamentöse Pilze, Hefen und Algen.

Bei der praktischen Anwendung kann die Biozidzusammensetzung entweder als fertiges Gemisch oder durch getrennte Zugabe der Biozide und der übrigen Komponenten der Zusammensetzung in den zu konservierenden Stoff eingebracht werden.

Die Beispiele erläutern die Erfindung.

Beispiel 1

Mit diesem Beispiel wird der Synergismus der beiden wesentlichen Wirkstoffe in der erfindungsgemäßen Biozidzusammensetzung aufgezeigt.

Dazu wurden wäßrige Gemische mit unterschiedlichen Konzentrationen an 2-Methylisothiazolin-3-on (MIT) und 1,2-Benzisothiazolin-3-on (BIT) hergestellt und die Wirkung dieser Gemische auf Escherichia coli (International Mycological Institute, Stammnummer IMI 362054) geprüft.

Die wäßrigen Gemische enthielten außer der Biozidkomponente und Wasser noch ein Nährmedium, nämlich eine Müller-Hinton-Bouillon (Handelsprodukt "Merck Nr. 10393"). Die Zelldichte von Escherichia coli lag bei $10^6$ Keime/ml. Die Inkubationszeit betrug 72 h bei 25°C. Jede Probe wurde mit 120 U/min auf einem Inkubationsschüttler bebrütet.

In der nachfolgenden Tabelle I sind die verwendeten Konzentrationen von MIT und BIT angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz von MIT allein ein MHK-Wert von 17,5 ppm und beim Einsatz von BIT allein ein MHK-Wert von 25 ppm. Dagegen sind die MHK-Werte von Gemischen aus MIT und BIT deutlich niedriger, das heißt MIT und BIT wirken in ihrer Kombination synergistisch.

Tabelle I

| MHK-Werte bezüglich Escherichia coli | | | | | | | | | | | | | |
|---|---|---|---|---|---|---|---|---|---|---|---|---|---|
| Konzentration MIT (ppm) | Konzentration BIT (ppm) | | | | | | | | | | | | |
| | 35 | 30 | 25 | 20 | 17,5 | 15 | 12,5 | 10 | 7,5 | 5 | 2,5 | 1 | 0 |
| 25 | - | - | - | - | - | - | - | - | - | - | - | - | - |
| 17,5 | - | - | - | - | - | - | - | - | - | - | - | - | - |
| 15 | - | - | - | - | - | - | - | - | - | - | - | - | + |
| 12,5 | - | - | - | - | - | - | - | - | - | - | - | + | + |
| 10 | - | - | - | - | - | - | - | - | - | - | - | + | + |
| 7,5 | - | - | - | - | - | - | - | - | - | + | + | + | + |
| 5 | - | - | - | - | - | - | - | + | + | + | + | + | + |
| 2,5 | - | - | - | - | + | + | + | + | + | + | + | + | + |
| 1 | - | - | - | + | + | + | + | + | + | + | + | + | + |
| 0 | - | - | - | + | + | + | + | + | + | + | + | + | + |

Der auftretende Synergismus wird mittels der in der Tabelle II angegebenen Berechnung des Synergieindex zahlenmäßig dargestellt. Die Berechnung des Synergieindex erfolgt nach der Methode von F.C. Kull et al., Applied Microbiology, Bd. 9 (1961), S. 538. Hier wird der Synergieindex mit der folgenden Formel berechnet:

$$\text{Synergieindex SI} = Q_a/Q_A + Q_b/Q_B.$$

Bei der Anwendung dieser Formel auf das hier geprüfte Biozidsystem haben die Größen in der Formel folgende Bedeutung:

$Q_a =$   Konzentration von BIT im Biozidgemisch aus BIT und MIT

$Q_A =$   Konzentration von BIT als einziges Biozid

$Q_b =$   Konzentration von MIT im Biozidgemisch aus MIT und BIT

$Q_B =$   Konzentration von MIT als einziges Biozid

Wenn der Synergieindex einen Wert von über 1 aufweist, bedeutet dies, daß ein Antagonismus vorliegt. Wenn der Synergieindex den Wert 1 annimmt, bedeutet dies, daß eine Addition der Wirkung der beiden Biozide gegeben ist. Wenn der Synergieindex einen Wert von unter 1 annimmt, bedeutet dies, daß ein Synergismus der beiden Biozide besteht.

Tabelle II

| Berechnung des Synergieindex bezüglich Escherichia coli | | | | | | | |
|---|---|---|---|---|---|---|---|
| MHK bei | | Gesamtkon-zentration BIT+MIT | Konzentration | | $Q_a/Q_A$ | $Q_b/Q_B$ | Synergiein-dex |
| BIT-Konzen-tration $Q_a$ (ppm) | MIT Konzen-tration $Q_b$ (ppm) | $Q_a + Q_b$ (ppm) | BIT (Gew%) | MIT (Gew%) | | | $Q_a/Q_A+Q_b/Q_B$ |
| 0 | 17,5 | 17,5 | 0,00 | 100,00 | 0,00 | 1,00 | 1,00 |
| 1 | 15 | 16 | 6,3 | 93,8 | 0,04 | 0,86 | 0,90 |
| 2,5 | 10 | 12,5 | 20,0 | 80,0 | 0,10 | 0,57 | 0,67 |
| 7,5 | 7,5 | 15 | 50,0 | 50,0 | 0,30 | 0,43 | 0,73 |
| 12,5 | 5 | 17,5 | 71,4 | 28,6 | 0,50 | 0,29 | 0,79 |
| 20 | 2,5 | 22,5 | 88,9 | 11,1 | 0,80 | 0,14 | 0,94 |
| 25 | 0 | 25 | 100,0 | 0,0 | 1,00 | 0,00 | 1,00 |

Aus der Tabelle II ist ersichtlich, daß der optimale Synergismus, d.h. der niedrigste Synergieindex (0,67) eines MIT/BIT-Gemisches, bei einem Gemisch aus 10 ppm MIT und 2,5 ppm BIT liegt.

Beispiel 2

Ähnlich wie im Beispiel 1 wird der Synergismus der beiden Wirkstoffe MIT und BIT gegenüber dem Mikroorganismus Pseudomonas putida aufgezeigt.
Die Biozidzusammensetzungen enthielten wieder eine Müller-Hinton-Bouillon als Nährmedium. Die Zelldichte lag bei $10^6$ Keime/ml. Die Inkubationszeit betrug 48 h bei 25°C. Jede Probe wurde mit 120 U/min auf einem Inkubationsschüttler bebrütet.
Aus der nachfolgenden Tabelle III sind die MHK-Werte der geprüften Biozidzusammensetzungen ersichtlich. Der MHK-Wert beim Einsatz von MIT allein betrug 12,5 ppm und beim Einsatz von BIT allein 60 ppm.

Tabelle III

| Konz. MIT (ppm) | Konzentration BIT (ppm) | | | | | | | | | | | | | | | |
|---|---|---|---|---|---|---|---|---|---|---|---|---|---|---|---|---|
| | 80 | 70 | 60 | 50 | 40 | 30 | 25 | 20 | 15 | 10 | 7,5 | 5 | 2,5 | 1 | 0,5 | 0 |
| 17,5 | - | - | - | - | - | - | - | - | - | - | - | - | - | - | - | - |
| 15 | - | - | - | - | - | - | - | - | - | - | - | - | - | - | - | - |
| 12,5 | - | - | - | - | - | - | - | - | - | - | - | - | - | - | - | - |
| 10 | - | - | - | - | - | - | - | - | - | - | - | - | - | + | + | + |
| 7,5 | - | - | - | - | - | - | - | - | - | - | - | - | + | + | + | + |
| 5 | - | - | - | - | - | - | - | - | - | + | + | + | + | + | + | + |
| 2,5 | - | - | - | - | - | - | - | - | + | + | + | + | + | + | + | + |
| 1 | - | - | - | - | - | - | - | + | + | + | + | + | + | + | + | + |
| 0,5 | - | - | - | - | - | + | + | + | + | + | + | + | + | + | + | + |
| 0 | - | - | - | + | + | + | + | + | + | + | + | + | + | + | + | + |

Bei gleichzeitigem Einsatz von MIT und BIT trat ein Synergismus ein. Die Berechnung des Synergieindex ergibt sich aus der Tabelle IV. Hiernach lag bei Pseudomonas putida der niedrigste Synergieindex (0,5) bei einem Gemisch aus 1 ppm MIT und 25 ppm BIT.

Tabelle IV

| Berechnung des Synergieindex bezüglich Pseudomonas putida | | | | | | | |
|---|---|---|---|---|---|---|---|
| MHK bei | | Gesamtkonzentration BIT+MIT | Konzentration | | $Q_a/Q_A$ | $Q_b/Q_B$ | Synergieindex |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/Q_A + Q_b/Q_B$ |
| 0 | 12,5 | 12,5 | 0,0 | 100,0 | 0,00 | 1,00 | 1,00 |
| 2,5 | 10 | 12,5 | 20,0 | 80,0 | 0,04 | 0,80 | 0,84 |
| 5 | 7,5 | 12,5 | 40,0 | 60,0 | 0,08 | 0,60 | 0,68 |
| 15 | 5 | 20 | 75,0 | 25,0 | 0,25 | 0,40 | 0,65 |
| 20 | 2,5 | 22,5 | 88,9 | 11,1 | 0,33 | 0,20 | 0,53 |
| 25 | 1 | 26 | 96,2 | 3,8 | 0,42 | 0,08 | 0,50 |
| 40 | 0,5 | 40,5 | 98,8 | 1,2 | 0,67 | 0,04 | 0,71 |
| 60 | 0 | 60 | 100,0 | 0,0 | 1,00 | 0,00 | 1,00 |

Beispiel 3

Ähnlich wie im Beispiel 1 wird der Synergismus von MIT und BIT gegenüber dem Mikroorganismus Pseudomonas stutzeri aufgezeigt.

Die Biozidzusammensetzungen enthielten wieder eine Müller-Hinton-Bouillon als Nährmedium. Die Zelldichte lag bei $10^6$ Keime/ml. Die Inkubationszeit betrug 72 h bei 25°C. Jede Probe wurde mit 120 U/min auf einem Inkubationsschüttler bebrütet.

Aus der nachfolgenden Tabelle V sind die MHK-Werte der geprüften Biozidzusammensetzungen ersichtlich.

Der MHK-Wert beim Einsatz von MIT allein betrug 12,5 ppm und beim Einsatz von BIT allein 20 ppm.

Tabelle V

| MHK-Werte bezüglich Pseudomonas stutzeri | | | | | | | | | | | |
|---|---|---|---|---|---|---|---|---|---|---|---|
| Konzentration MIT (ppm) | Konzentration BIT (ppm) | | | | | | | | | | |
| | 30 | 25 | 20 | 15 | 10 | 7,5 | 5 | 2,5 | 1 | 0,5 | 0 |
| 30 | - | - | - | - | - | - | - | - | - | - | - |
| 25 | - | - | - | - | - | - | - | - | - | - | - |
| 20 | - | - | - | - | - | - | - | - | - | - | - |
| 17,5 | - | - | - | - | - | - | - | - | - | - | - |
| 15 | - | - | - | - | - | - | - | - | - | - | - |
| 12,5 | - | - | - | - | - | - | - | - | - | - | - |
| 10 | - | - | - | - | - | - | - | - | - | - | + |
| 7,5 | - | - | - | - | - | - | - | + | + | + | + |
| 5 | - | - | - | - | - | - | - | + | + | + | + |
| 2,5 | - | - | - | - | - | + | + | + | + | + | + |
| 1 | - | - | - | - | + | + | + | + | + | + | + |
| 0,5 | - | - | - | + | + | + | + | + | + | + | + |
| 0 | - | - | - | + | + | + | + | + | + | + | + |

Bei gleichzeitigem Einsatz von MIT und BIT trat ein Synergismus ein. Die Berechnung des Synergieindex ergibt sich aus der Tabelle VI. Hiernach lag bei Pseudomonas stutzeri der niedrigste Synergieindex (0,65) bei einem Gemisch aus 5 ppm MIT und 5 ppm BIT.

Tabelle VI

| Berechnung des Synergismus bezüglich Pseudomonas stutzeri | | | | | | | |
|---|---|---|---|---|---|---|---|
| MHK bei | | Gesamtkonzentration BIT+MIT | Konzentration | | $Q_a/Q_A$ | $Q_b/Q_B$ | Synergieindex |
| BIT Konzentration $Q_a$ (ppm) | MIT Konzentration $Q_b$ (ppm) | $Q_a + Q_b$ (ppm) | BIT (Gew%) | MIT (Gew%) | | | $Q_a/Q_A+Q_b/Q_B$ |
| 0 | 12,5 | 12,5 | 0,0 | 100,0 | 0,00 | 1,00 | 1,00 |
| 0,5 | 10 | 10,5 | 4,8 | 95,2 | 0,03 | 0,80 | 0,83 |
| 5 | 5 | 10 | 50,0 | 50,0 | 0,25 | 0,40 | 0,65 |
| 10 | 2,5 | 12,5 | 80,0 | 20,0 | 0,50 | 0,20 | 0,70 |
| 15 | 1 | 16 | 93,8 | 6,3 | 0,75 | 0,08 | 0,83 |
| 20 | 0 | 20 | 100,0 | 0,0 | 1,00 | 0,00 | 1,00 |

Beispiel 4

Ähnlich wie im Beispiel 1 wird der Synergismus der beiden Wirkstoffe MIT und BIT gegenüber dem Mikroorganismus Klebsiella pneumoniae aufgezeigt.
Die Biozidzusammensetzungen enthielten wieder eine Müller-Hinton-Bouillon als Nährmedium. Die Zelldichte

lag bei $10^6$ Keime/ml. Die Inkubationszeit betrug 72 h bei 25°C. Jede Probe wurde mit 120 U/min auf einem Inkubationsschüttler bebrütet.

Aus der nachfolgenden Tabelle VII sind die MHK-Werte der geprüften Biozidzusammensetzungen ersichtlich. Der MHK-Wert beim Einsatz von MIT allein betrug 20 ppm und beim Einsatz von BIT allein 25 ppm.

Tabelle VII

| MHK-Werte bezüglich Klebsiella pneumoniae | | | | | | | | | | | |
|---|---|---|---|---|---|---|---|---|---|---|---|
| Konzentration MIT (ppm) | Konzentration BIT (ppm) | | | | | | | | | | |
| | 35 | 30 | 25 | 20 | 15 | 10 | 7,5 | 5 | 2,5 | 1 | 0 |
| 25 | - | - | - | - | - | - | - | - | - | - | - |
| 20 | - | - | - | - | - | - | - | - | - | - | - |
| 17,5 | - | - | - | - | - | - | - | - | - | + | + |
| 15 | - | - | - | - | - | - | - | - | - | + | + |
| 12,5 | - | - | - | - | - | - | - | - | - | + | + |
| 10 | - | - | - | - | - | - | - | - | + | + | + |
| 7,5 | - | - | - | - | - | - | + | + | + | + | + |
| 5 | - | - | - | - | - | + | + | + | + | + | + |
| 2,5 | - | - | - | + | + | + | + | + | + | + | + |
| 1 | - | - | - | + | + | + | + | + | + | + | + |
| 0 | - | - | - | + | + | + | + | + | + | + | + |

Bei gleichzeitigem Einsatz von MIT und BIT trat ein Synergismus ein. Die Berechnung des Synergieindex ergibt sich aus der Tabelle IX. Hiernach lag bei Pseudomonas aeruginosa der niedrigste Synergieindex (0,68) bei einem Gemisch aus 7,5 ppm MIT und 7,5 ppm BIT.

Tabelle VIII

| Berechnung des Synergieindex bezüglich Klebsiella pneumoniae | | | | | | | |
|---|---|---|---|---|---|---|---|
| MHK bei | | Gesamtkon-zentration BIT+MIT | Konzentration | | $Q_a/Q_A$ | $Q_b/Q_B$ | Synergiein-dex |
| BIT Konzen-tration $Q_a$ (ppm) | MIT Konzen-tration $Q_b$ (ppm) | $Q_a + Q_b$ (ppm) | BIT (Gew%) | MIT (Gew%) | | | $Q_a/Q_A+Q_b/Q_B$ |
| 0 | 20 | 20 | 0,0 | 100,0 | 0,00 | 1,00 | 1,00 |
| 2,5 | 12,5 | 15 | 16,7 | 83,3 | 0,10 | 0,63 | 0,73 |
| 5 | 10 | 15 | 33,3 | 66,7 | 0,20 | 0,50 | 0,70 |
| 7,5 | 7,5 | 15 | 50,0 | 50,0 | 0,30 | 0,38 | 0,68 |
| 15 | 5 | 20 | 75,0 | 25,0 | 0,60 | 0,25 | 0,85 |
| 20 | 5 | 25 | 80,0 | 20,0 | 0,80 | 0,25 | 1,05 |
| 25 | 0 | 25 | 100,0 | 0,0 | 1,00 | 0,00 | 1,00 |

Beispiel 5

Ähnlich wie im Beispiel 1 wird der Synergismus der beiden Wirkstoffe MIT und BIT gegenüber dem Mikroorganismus Pseudomonas aeruginosa aufgezeigt.

Die Biozidzusammensetzungen enthielten wieder eine Müller-Hinton-Bouillon als Nährmedium. Die Zelldichte lag bei $10^6$ Keime/ml. Die Inkubationszeit betrug 48 h bei 25°C. Jede Probe wurde mit 120 U/min auf einem Inkubationsschüttler bebrütet.

Aus der nachfolgenden Tabelle IX sind die MHK-Werte der geprüften Biozidzusammensetzungen ersichtlich. Der MHK-Wert beim Einsatz von MIT allein betrug 30 ppm und beim Einsatz von BIT allein 150 ppm.

Tabelle IX

| MHK-Werte bezüglich Pseudomonas aeruginosa | | | | | | | | | | | |
|---|---|---|---|---|---|---|---|---|---|---|---|
| Konzentration MIT (ppm) | Konzentration BIT (ppm) | | | | | | | | | | |
| | 200 | 175 | 150 | 125 | 100 | 75 | 50 | 25 | 10 | 5 | 0 |
| 50 | - | - | - | - | - | - | - | - | - | - | - |
| 40 | - | - | - | - | - | - | - | - | - | - | - |
| 30 | - | - | - | - | - | - | - | - | - | - | - |
| 20 | - | - | - | - | - | - | - | - | - | + | + |
| 10 | - | - | - | - | - | - | - | + | + | + | + |
| 5 | - | - | - | - | - | + | + | + | + | + | + |
| 2,5 | - | - | - | - | + | + | + | + | + | + | + |
| 1 | - | - | - | + | + | + | + | + | + | + | + |
| 0 | - | - | - | + | + | + | + | + | + | + | + |

Bei gleichzeitigem Einsatz von MIT und BIT trat ein Synergismus ein. Die Berechnung des Synergieindex ergibt sich aus der Tabelle X. Hiernach lag bei Pseudomonas aeruginosa der niedrigste Synergieindex (0,67) bei einem Gemisch aus 10 ppm MIT und 50 ppm BIT.

Tabelle X

| Berechnung des Synergieindex bezüglich Pseudomonas aeruginosa | | | | | $Q_a/Q_A$ | $Q_b/Q_B$ | Synergiein-dex |
|---|---|---|---|---|---|---|---|
| MHK bei | | Gesamtkon-zentration BIT+MIT | Konzentration | | | | |
| BIT Konzen-tration $Q_a$ (ppm) | MIT Konzen-tration $Q_b$ (ppm) | $Q_a + Q_b$ (ppm) | BIT (Gew%) | MIT (Gew%) | | | $Q_a/Q_A+Q_b/Q_B$ |
| 0 | 30 | 30 | 0,0 | 100,0 | 0,00 | 1,00 | 1,00 |
| 10 | 20 | 30 | 33,3 | 66,7 | 0,07 | 0,67 | 0,73 |
| 50 | 10 | 60 | 83,3 | 16,7 | 0,33 | 0,33 | 0,67 |
| 100 | 5 | 105 | 95,2 | 4,8 | 0,67 | 0,17 | 0,83 |
| 125 | 2,5 | 127,5 | 98,0 | 2,0 | 0,83 | 0,08 | 0,92 |
| 150 | 0 | 150 | 100,0 | 0,0 | 1,00 | 0,00 | 1,00 |

<u>Beispiel 6</u>

Es wurde eine Biozidzusammensetzung aus folgenden Komponenten hergestellt:

| Komponente | Menge (Gew.-teile) |
|---|---|
| 2-Methylisothiazolin-3-on (98 gew%-ig) | 5,1 |
| 1,2-Benzisothiazolin-3-on (in Form eines Gemisches aus 74,6 Gew% BIT und 25,4 Gew% Wasser; Handelsprodukt "Acticide BIT" der Firma Thor Chemie GmbH) | 6,7 |
| Polyethylenglykol (mittlere Molmasse 400 g/mol) | 88,2 |

Die fertige Formulierung der Biozidzusammensetzung ist eine klare Lösung, was auf das Polyethylenglykol zurückzuführen ist. Die Lösung eignet sich für den Einsatz z. B. in Anstrichmitteln, Polymerdispersionen, Putzmörtelsystemen und Kühlschmierstoffen gegen den Befall durch Bakterien, filamentöse Pilze und Hefen.

Beispiel 7

Es wurde eine Biozidzusammensetzung aus den folgenden Komponenten hergestellt:

| Komponente | Menge (Gew.-teile) |
|---|---|
| 2-Methylisothiazolin-3-on (in Form einer Lösung von 20 Gew% MIT in Wasser) | 25 |
| 1,2-Benzisothiazolin-3-on (in Form einer Suspension von von 20 Gew% BIT in Wasser; Handelsprodukt "Acticide BW 20" der Firma Thor Chemie GmbH) | 25 |
| Verdicker auf Xanthan-Basis (Handelsprodukt "Rhodopol 50 MD" der Firma Rhône-Poulenc) | 0,4 |
| Entschäumer (Handelsprodukt "Drewplus T 4202" der Firma Drew Ameroid) | 0,1 |
| Wasser | 69,5 |

In der fertigen Formulierung der Biozidzusammensetzung liegt das BIT in fein suspendierter Form vor. Die Formulierung eignet sich für die Einsatzzwecke, die vorstehend in der Beschreibung angegeben sind.

Beispiel 8

Es wurde eine Biozidzusammensetzung aus folgenden Komponenten hergestellt:

| Komponente | Menge (Gew%) |
|---|---|
| 1,2-Benzisothiazolin-3-on (als Gemisch aus 74,6 Gew% BIT und 25,4 Gew% Wasser) | 3,35 |
| Wasser | 92,8 |
| Natriumhydroxidlösung (50 gew%-ig in Wasser) | 1,3 |
| 2-Methylisothiazolin-3-on (98 gew%-ig) | 2,55 |
| | 100,00 |

Das BIT-Wasser-Gemisch (Gewichtsverhältnis 74,6:25,4) wurde mit dem zusätzlichen Wasser versetzt und dann durch Zugabe der Natriumhydroxidlösung in eine Lösung überführt, die wegen der Bildung des entsprechenden Natriumsalzes entsteht. Schließlich wurde das MIT zugegeben. Die fertige Formulierung war eine klare Lösung und hatte einen pH-Wert von ca. 8,2.
Die fertige Formulierung der Biozidzusammensetzung eignet sich für die Einsatzzwecke, die vorstehend angegeben sind.

Beispiel 9

Es wurden erfindungsgemäße Biozidzusammensetzungen in eine Beschichtungsmasse A eingearbeitet, die zum Beschichten von Fassaden dient. Bei dieser Beschichtungsmasse handelt es sich um einen Putz auf der Basis einer wäßrigen Polymerdispersion, der unter der Kennzeichnung "Granol KR 3.0" im Handel (Firma Steinwerke Kupferdreh GmbH) erhältlich ist. Der Zusatz der erfindungsgemäßen Biozidzusammensetzung diente der Konservierung der Beschichtungsmasse vor ihrer Verwendung, d.h. während der Lagerung in ihren Gebinden.

Es wurden jeweils 50 g der Beschichtungsmasse A mit den in der nachfolgenden Tabelle XI angegebenen Bioziden versetzt. Die genannten Biozidmengen beziehen sich auf die Menge der Beschichtungsmasse A. In den Gemischen MIT/BIT lagen die beiden Biozide im Gewichtsverhältnis von 1:1 vor.

Außer einer Blindprobe ohne Biozidzusatz wurde jede Probe der Beschichtungsmasse A mit 1 ml eines Standard-Bakterieninoculums versetzt, das folgende Bakterienstämme enthielt:

Shewanella putrefaciens
Alcaligenes faecalis
Serratia liquefaciens
Klebsiella species
Proteus penneri/vulgaris
Providencia rettgeri
Pseudomonas fluorescens
Pseudomonas aeruginosa
Pseudomonas stutzeri
Escherichia coli
Corynebacterium pseudodiphteriae
Cellulomonas flavigena
Corynebacterium species

Die Zelldichte des Inoculums lag bei $10^{10}$ bis $3 \cdot 10^{10}$ Keime/ml, die Zelldichte der Proben bei $2 \cdot 10^8$ bis $6 \cdot 10^8$ Keime/g. Die Proben wurden 7 Tage bei 30°C gelagert. Anschließend wurde von jeder Probe ein Ausstrich auf einer Nutrient-Agar-Platte hergestellt, 48 h bei 30°C gelagert und dann hinsichtlich des Bakterienwachstums beurteilt. Dabei wurde folgender Bewertungsmaßstab angewandt:

0 =    kein Wachstum
1 =    minimales Wachstum bis zu 10 Kolonien
2 =    leichtes Wachstum bis zu 100 Kolonien
3 =    mäßiges Wachstum bis zu 300 Kolonien
4 =    gleichmäßiges Wachstum, einzelne Kolonien noch erkennbar
5 =    starkes Wachstum, zu viele Kolonien zum Auszählen, aber nicht gesamte Oberfläche bewachsen
6 =    flächiges Wachstum, kaum Einzelkolonien, gesamte Ausstrichfläche bewachsen

Wenn das Bakterienwachstum mit einem Wert von unter 6 beurteilt wurde, fügte man der zugehörigen ursprünglichen 50g-Probe ein zweites Bakterieninoculum der vorgenannten Art zu und lagerte sie wieder 7 Tage bei 30°C. Anschließend wurde erneut ein Ausstrich auf einer Nutrient-Agar-Platte hergestellt, der nach einer Lagerzeit von 48 h bei 30°C wiederum auf sein Bakterienwachstum hin geprüft wurde.

Wenn bei einer Probe das Bakterienwachstum des Ausstrichs den Wert 6 erhielt, wurde damit die Prüfung dieser Probe beendet. Solange eine Probe diesen Wert nicht erreicht hat, wurde sie erneut in der vorgenannten Weise mit einem Bakterieninoculum versetzt und gelagert sowie durch einen Ausstrich überprüft. Dieses Vorgehen wurde nötigenfalls wiederholt, wobei höchstens vier Bakterieninoculi je Probe zugesetzt wurden.

In der Tabelle XI sind die Ergebnisse für die Beschichtungsmasse A zusammengefaßt.

Tabelle XI

| Beschichtungsmasse A | |
|---|---|
| Biozid (Gew%) | Bakterienwachstum, 7 d + 48 h nach 4. Inokulation |
| ohne | (Wachstum schon nach 1. Inokulation) |

Tabelle XI (fortgesetzt)

| Beschichtungsmasse A | | |
|---|---|---|
| Biozid (Gew%) | | Bakterienwachstum, 7 d + 48 h nach 4. Inokulation |
| BIT | 0,005 | (Wachstum schon nach 1. Inokulation) |
| | 0,01 | (Wachstum schon nach 1. Inokulation) |
| | 0,015 | (Wachstum schon nach 2. Inokulation) |
| | 0,02 | (Wachstum schon nach 2. Inokulation) |
| | 0,03 | (Wachstum schon nach 3. Inokulation) |
| MIT | 0,005 | 6 |
| | 0,01 | 5 |
| | 0,015 | 5 |
| | 0,02 | 4 |
| | 0,03 | 0 |
| MIT/BIT | 0,005 | 5 |
| | 0,01 | 0 |
| | 0,015 | 0 |
| | 0,02 | 0 |
| | 0,03 | 0 |

Aus der Tabelle XI ist ersichtlich, daß die Probe ohne Biozidzusatz bereits nach dem ersten Inoculum ein volles Bakterienwachstum ergab.

Im Falle des Zusatzes von BIT allein war das volle Bakterienwachstum bei 0,005 Gew% BIT bereits nach der ersten Inokulation, bei 0,015 Gew% BIT nach der zweiten Inokulation und bei 0,03 Gew% BIT nach der dritten Inokulation erreicht.

Im Falle des Zusatzes von MIT allein wurde das volle Bakterienwachstum erst nach vier Inokulationen erreicht, und zwar bei der kleinsten Biozidmenge von 0,005 Gew%. Aber auch bei den höheren Biozidkonzentrationen von 0,01, 0,015 und 0,02 Gew% MIT wurde noch ein gleichmäßiges bis starkes Bakterienwachstum festgestellt. Nur bei der Probe mit der höchsten Konzentration von 0,03 Gew% MIT wurde auch nach vier Inokulationen kein Bakterienwachstum festgestellt.

Dagegen erwies sich die erfindungsgemäße Biozidzusammensetzung aus MIT und BIT als wesentlich wirksamer. Nach vier Inokulationen trat nur bei der geringsten Konzentration von 0,005 Gew% MIT/BIT noch ein deutliches Bakterienwachstum ein. Bei den höheren Konzentrationen im Bereich von 0,01 bis 0,03 Gew% MIT/BIT wurde das Bakterienwachstum in der Beschichtungsmasse A vollkommen verhindert.

Beispiel 10

Beispiel 9 wurde wiederholt, jedoch unter Einsatz der Beschichtungsmasse B anstelle der Beschichtungsmasse A.

Bei der Beschichtungsmasse B handelt es sich um einen besonders emissionsarmen Putz auf der Basis einer Polymerdispersion, der unter der Kennzeichnung "Granol KR 3.0 LF" im Handel (Firma Steinwerke Kupferdreh GmbH) erhältlich ist.

Die Ergebnisse mit der Beschichtungsmasse B sind in der nachfolgenden Tabelle XII zusammengefaßt.

Tabelle XII

| Beschichtungsmasse B | | |
|---|---|---|
| Biozid (Gew%) | | Bakterienwachstum, 7 d + 48 h nach 4. Inokulation |
| ohne | | (Wachstum schon nach 1. Inokulation) |
| BIT | 0,005 | (Wachstum schon nach 1. Inokulation) |
| | 0,01 | (Wachstum schon nach 1. Inokulation) |
| | 0,015 | (Wachstum schon nach 2. Inokulation) |
| | 0,02 | (Wachstum schon nach 2. Inokulation) |
| | 0,03 | (Wachstum schon nach 3. Inokulation) |
| MIT | 0,005 | 4 |
| | 0,01 | 1 |
| | 0,015 | 1 |
| | 0,02 | 0 |
| | 0,03 | 0 |
| MIT/BIT | 0,005 | 5 |
| | 0,01 | 0 |
| | 0,015 | 0 |
| | 0,02 | 0 |
| | 0,03 | 0 |

Die Ergebnisse mit der Beschichtungsmasse B entsprechen weitgehend jenen bei der Beschichtungsmasse A.

Auch im Falle der Beschichtungsmasse B erfolgte schon nach der ersten Inokulation ein volles Bakterienwachstum.

Beim Einsatz von BIT allein wurde spätestens nach der dritten Inokulation das volle Bakterienwachstum erreicht.

Bei Verwendung von MIT allein konnte nach der vierten Inokulation nur mit den höchsten Konzentrationen von 0,02 und 0,03 Gew% das Bakterienwachstum ganz verhindert werden.

Dagegen gelang es mit der erfindungsgemäßen Kombination MIT/BIT, bereits mit der relativ niedrigen Konzentration von 0,01 Gew% das Bakterienwachstum vollkommen zu unterdrücken.

**Patentansprüche**

1.    Biozidzusammensetzung als Zusatz zu Stoffen, die von schädlichen Mikroorganismen befallen werden können, wobei die Biozidzusammensetzung mindestens zwei biozide Wirkstoffe aufweist, von denen einer 2-Methylisothiazolin-3-on ist, dadurch gekennzeichnet, daß die Biozidzusammensetzung als einen weiteren bioziden Wirkstoff 1,2-Benzisothiazolin-3-on enthält.

2.    Biozidzusammensetzung nach Anspruch 1, dadurch gekennzeichnet, daß sie 2-Methylisothiazolin-3-on und 1,2-Benzisothiazolin-3-on im Gewichtsverhältnis von (50-1):(1-50) enthält.

3.    Biozidzusammensetzung nach Anspruch 2, dadurch gekennzeichnet, daß sie 2-Methylisothiazolin-3-on und 1,2-Benzisothiazolin-3-on im Gewichtsverhältnis von (15-1):(1-8) enthält.

4.    Biozidzusammensetzung nach einem der Ansprüche 1 bis 3, dadurch gekennzeichnet, daß sie 2-Methylisothiazolin-3-on und 1,2-Benzisothiazolin-3-on in einer Gesamtkonzentration von 5 bis 20 Gew%, bezogen auf gesamte Biozidzusammensetzung, enthält.

5. Biozidzusammensetzung nach einem der Ansprüche 1 bis 4, dadurch gekennzeichnet, daß sie ein polares und/oder ein unpolares flüssiges Medium enthält.

6. Biozidzusammensetzung nach Anspruch 5, dadurch gekennzeichnet, daß sie als polares flüssiges Medium Wasser, einen aliphatischen Alkohol mit 1 bis 4 Kohlenstoffatomen, ein Glykol, einen Glykolether, ein Glykolester, ein Polyethylenglykol, ein Polypropylenglykol, N,N-Dimethylformamid oder ein Gemisch aus solchen Stoffen enthält.

7. Biozidzusammensetzung nach Anspruch 6, dadurch gekennzeichnet, daß das polare flüssige Medium Wasser ist und die Zusammensetzung einen pH-Wert von 7 aufweist.

8. Biozidzusammensetzung nach Anspruch 5, dadurch gekennzeichnet, daß sie als unpolares flüssiges Medium Xylol und/oder Toluol enthält.

9. Verwendung der Biozidzusammensetzung nach einem der Ansprüche 1 bis 8 zur Bekämpfung von schädlichen Mikroorganismen.

Europäisches
Patentamt

**EUROPÄISCHER RECHERCHENBERICHT**

Nummer der Anmeldung

EP 97 11 4397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 112, no. 11, 12.März 1990 Columbus, Ohio, US; abstract no. 93924, O. UMEKAWA: "Synergistic industrial microbicides containing isothiazoline derivatives" XP002056108 * Zusammenfassung * | 1-9 | A01N43/80 |
| X | & JP 01 224 306 A (UMEKAWA) 7.September 1989 * Zusammenfassung * | 1-9 | |
| X | CHEMICAL ABSTRACTS, vol. 121, no. 11, 12.September 1994 Columbus, Ohio, US; abstract no. 127844, A. WAKABAYASHI & S. PPONMA: "Stable liquid bactericides and fungicides containing isothiazolones and propanols" XP002056109 * Zusammenfassung * | 1-9 | |
| X | & JP 06 092 806 A (HOKKO CHEM. IND. CO. LTD.) 5.April 1994 * Zusammenfassung * | 1-9 | RECHERCHIERTE SACHGEBIETE (Int.Cl.6) A01N |
| D,A | EP 0 676 140 A (ROHM & HAAS) 11.Oktober 1995 * das ganze Dokument * | 1-9 | |
| A | EP 0 542 721 A (ICI PLC) 19.Mai 1993 * Ansprüche 1,5,6 * | 1-9 | |

Der vorliegende Recherchenbericht wurde für alle Patentansprüche erstellt

| Recherchenort | Abschlußdatum der Recherche | Prüfer |
|---|---|---|
| MÜNCHEN | 18.Februar 1998 | Klaver, J |

**ANHANG ZUM EUROPÄISCHEN RECHERCHENBERICHT
ÜBER DIE EUROPÄISCHE PATENTANMELDUNG NR.**

EP 97 11 4397

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-1998

| Im Recherchenbericht angeführtes Patentdokument | Datum der Veröffentlichung | Mitglied(er) der Patentfamilie | Datum der Veröffentlichung |
|---|---|---|---|
| EP 0676140 A | 11-10-95 | AU 1614395 A<br>CA 2145947 A<br>CN 1121389 A<br>JP 8081311 A<br>ZA 9502719 A | 19-10-95<br>08-10-95<br>01-05-96<br>26-03-96<br>21-12-95 |
| EP 0542721 A | 19-05-93 | AT 106183 T<br>AU 630288 B<br>AU 7516991 A<br>CA 2041349 A<br>DE 69102203 D<br>EP 0457435 A<br>ES 2056577 T<br>FI 97678 B<br>IE 64991 B<br>JP 7069817 A<br>NO 179992 B<br>US 5364874 A<br>US 5464851 A<br>CA 2041348 A | 15-06-94<br>22-10-92<br>21-11-91<br>28-10-91<br>07-07-94<br>21-11-91<br>01-10-94<br>31-10-96<br>20-09-95<br>14-03-95<br>21-10-96<br>15-11-94<br>07-11-95<br>28-10-91 |

EPO FORM P0461

Für nähere Einzelheiten zu diesem Anhang : siehe Amtsblatt des Europäischen Patentamts, Nr.12/82